# EUROPEAN PATENT SPECIFICATION

(11) **EP 1 222 818 B1**
(45) Date of publication and mention of the grant of the patent: **03.12.2003**
(21) Application number: 00992758.3
(22) Date of filing: 19.10.2000
(51) Int. Cl.: H04N 7/16

(54) **TUNING OF MULTIPLE APPLICATION ENABLED DIGITAL COMMUNICATION TERMINALS TO ACCESS SERVICES**
ABSTIMMUNG DIGITALER KOMMUNIKATIONSENDGERÄTE MIT MEHRFACHANWENDUNG FÜR ZUGANGSDIENSTE
REGLAGE DE TERMINAUX DE COMMUNICATION NUMERIQUES POUR APPLICATIONS MULTIPLES SUR DES SERVICES D'ACCES

(30) Priority: 22.10.1999 US 161174 P
(43) Date of publication of application: 17.07.2002
(73) Proprietor: General Instrument Corporation, Horsham, Pennsylvania 19044 (US)
(72) Inventor: BOOTH, Robert, Charles, Jamison, PA 18929 (US); TAVOLETTI, Donald, Warrington, PA 18976 (US); DEL SORDO, Chris, Souderton, PA 18964 (US)
(74) Representative: Regelmann, Thomas, Dr.
(86) International application number: US0041285
(87) International publication number: WO01031922

(56) References cited:
- EP-A- 0 698 999
- EP-A- 0 834 798
- US-A- 5 167 035
- US-A- 5 208 665
- US-A- 5 850 218
- US-A- 5 919 247
- PATENT ABSTRACTS OF JAPAN vol. 1996, no. 10, 31 October 1996 (1996-10-31) & JP 08 149096 A (SONY CORP), 7 June 1996 (1996-06-07)

## Description

### BACKGROUND OF THE INVENTION

The present invention relates to cable and satellite television systems and the like, and more particularly to methods and procedures for allowing a digital terminal to tune to specific programming sources and/or services before enabling or running an application or a virtual application. In particular, the invention relates to terminals which are operating in a Multiple Applications Management (MAM) environment in a digital network. The present invention utilizes a digital message (such as a Virtual Object message encapsulated within an MPEG message), transmitted across any network (such as delivered via a broadband cable network), to deliver program source and/or service information to a digital terminal.

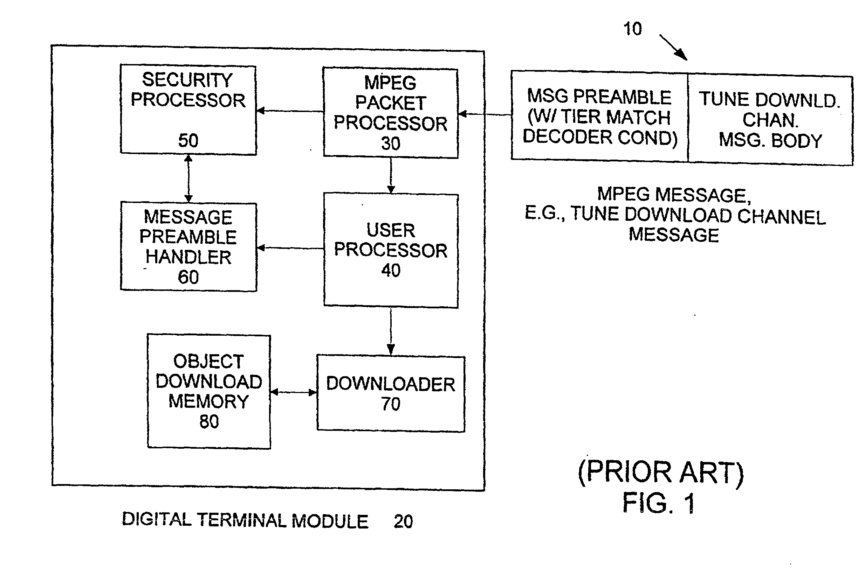

Traditionally, there has been only one software application, viz., an Electronic Program Guide (EPG), available in a digital network. Any run time data needed by such an application was downloaded as part of the object code for the application. Figure 1 shows the modules in a prior art digital terminal prior to the implementation of Multiple Applications Management.

In Figure 1, a standard MPEG (Moving Picture Experts' Group) message 10 is received at the terminal 20. An MPEG packet processor 30 and a user processor 40 process the packet 10. A security processor 50 is in communication with the MPEG packet processor 30 for determining a user's authorization rights. The user processor 40 is in communication with a message preamble handler 60, which enables the terminal 20 to download the authorized application via downloader 70. The downloaded application is then stored in object download memory 80. The enabled application (e.g., an EPG) can then be displayed.

In such prior art terminals, "traditional" applications (i.e. the EPG) received key responses from the human user. Using the built in data of the application and the information from Virtual Channel Tables, the application could cause the digital terminal to switch to channels associated with specific sources or services. However, after the application was downloaded into the digital terminal, there was no way available to specify which sources and/or services, and the associated channel(s), the digital terminal should tune to before enabling the application. In addition, while the application was enabled and running it was not possible for an application to specify which sources and/or services a digital terminal should tune to for acquiring video, audio and/or data content for the application.

Various software applications other than an EPG can be written for digital terminals. The prior art document US-A-5 208 665 discloses an image display in an interactive connection system having data in digitised packets with subscriber addresses routed by controller-converters to the subscriber.

In EP-A-0 698 999 a video data provision system for video on demand is disclosed which uses a real time controller coupled to data sources which switches to couple any part of data storage system or network channel to any selected data source. Newer versions of digital terminal firmware support Multiple Applications Management (MAM). A MAM environment allows multiple applications to be downloaded to and/or enabled in a digital terminal. These software applications enhance the user experience and increase the revenue for service providers and for equipment manufacturers. Examples of such applications include email, video-on-demand, web browsing, electronic programming guide, advertising, audio-on-demand, telephony services, stock prices, weather data, travel services and information, games, gambling, banking, shopping, voting, and the like.

MAM is proprietary technology owned by General Instrument Corporation of Horsham, Pennsylvania, USA, the assignee of the present invention. MAM is described in co-pending, commonly assigned U.S. Patent Application No. PCT/US 99/24745 filed October 22, 1999. Multiple Application Management is implemented by using some new, as well as some existing messages that are modified and/or interpreted differently. The MAM functionality within digital terminals receives and processes these messages.

A MAM environment allows multiple applications to be downloaded into a digital terminal. Under MAM, the number of applications available to a digital terminal is expected to grow considerably, beyond the single traditional EPG application. Therefore, a means must be provided so that sources and/or services associated with an application can be specified. The digital terminal can then tune to the associated channel(s) before enabling the application or while the application is running.

The invention fulfills various needs in digital communication systems. Advantageously, the invention allows various sources or services to be associated with applications. These sources and/or services can be tuned to on associated channels before enabling an application. The application can obtain dynamic video, audio and/or data content over these channels. In this manner, the features that an application can provide are enhanced.

The present invention provides the aforementioned and other advantages.

### SUMMARY OF THE INVENTION

In a preferred embodiment, a system is provided for tuning a digital terminal to access services. A terminal is provided which may have one or more tuners. A server is provided which is in communication with the terminal for sending one or more digital messages to the terminal. The digital messages contain information associating each of one or more applications with a respective one or more channel(s). An application may be associated with more than one channel. The one or more tuners can tune to the respective one or more channel(s) associated with a particular application in response to a user request for that application in order to allow the terminal to obtain at least one of a video service, an audio service, and a data content service from the tuned channel(s) for use by the application.

The server may be a controller (e.g., a DAC), a web server, or a proxy server.

The information contained in the one or more digital messages may associate each of one or more applications with at least one of a respective program source and a respective service and may associate each of one or more channel numbers with at least one of the respective program source and the respective service.

The one or more applications may be provided on the terminal. The channel or channels may be tuned when either the requested application is enabled, before the requested application is enabled, or after the requested application is enabled.

In a preferred embodiment, the one or more digital messages may comprise two digital messages. A first digital message may contain information associating each of the one or more applications with at least one of: (i) one or more respective program sources; and (ii) one or more respective services. A second digital message may contain information associating each of one or more channel numbers with at least one of the respective program source and the respective service.

The first digital message may be a Virtual Object Message and the second digital message may be a Virtual Channel Message.

Alternatively, the first digital message may include a Virtual Application Table (VAT) containing one or more VAT records, each of which provides the association of each of the one or more applications with at least one of: (i) one or more respective program sources; and (ii) one or more respective services; and the second digital message may include a Virtual Channel Table (VCT) which provides the association of each of the one or more channel numbers with at least one of the respective program source or said respective service.

Each VAT record may comprise one or more VCT_source_ID fields, each of which identifies the respective programming source associated with an application, and one or more VCT_application_ID fields, each of which identifies the respective service associated with an application.

The terminal may be adapted to be operated in a Multiple Applications Management (MAM) environment.

In a preferred embodiment, the system may prepare a list of authorized applications available for use on the terminal. A menu of authorized applications available on the terminal may be provided for user selection.

At least one of the one or more applications may be a virtual application. Virtual applications are applications that can be identified, downloaded, and enabled under the control of the MAM. Virtual applications can be transported to terminals using any reliable transport protocol (e.g., Digital Consumer Terminal ("DCT") Download messages).

The information in the terminal may be maintained in non-volatile memory, such that the information is preserved through resets of the terminal.

One application (e.g., an EPG) may be designated as a system wide default application authorized to run on all terminals in a digital network. This feature provides for backward compatibility with older terminals which may be present in the digital network and which are not capable of running in a MAM environment.

The services and/or applications that can be accessed via the terminal include at least one of email services, Internet services, news services, scripting language content, video-on-demand, web browsing, electronic programming guide, advertising, audio-on-demand, telephony services, stock prices, weather data, travel services and information, games, gambling, banking, shopping, voting, and the like.

### BRIEF DESCRIPTION OF THE DRAWINGS

Figure 1 shows a prior art digital terminal system which is not MAM enabled;
Figure 2 shows a block diagram of an implementation of the present invention;
Figure 3 shows a block diagram of an implementation of a communication terminal in accordance with the present invention; and
Figure 4 shows an example of the relationship between the VAT and VCT.

### DETAILED DESCRIPTION OF THE INVENTION

The present invention relates to methods and procedures for allowing a digital terminal to tune to specific programming sources and/or services before enabling or running an application or a virtual application. In particular, the invention relates to terminals which are operating in a Multiple Applications Management (MAM) environment in a digital network. The present invention utilizes a digital message (such as a Virtual Object message encapsulated within an MPEG message), transmitted across any network (such as delivered via a broadband cable network), to deliver program source and/or service information to a digital consumer terminal (DCT).

In accordance with the invention, digital terminals can be authorized for acquiring and enabling of multiple applications by messages created, encapsulated in MPEG (Moving Picture Experts Group) format, and sent by a server to the terminals.

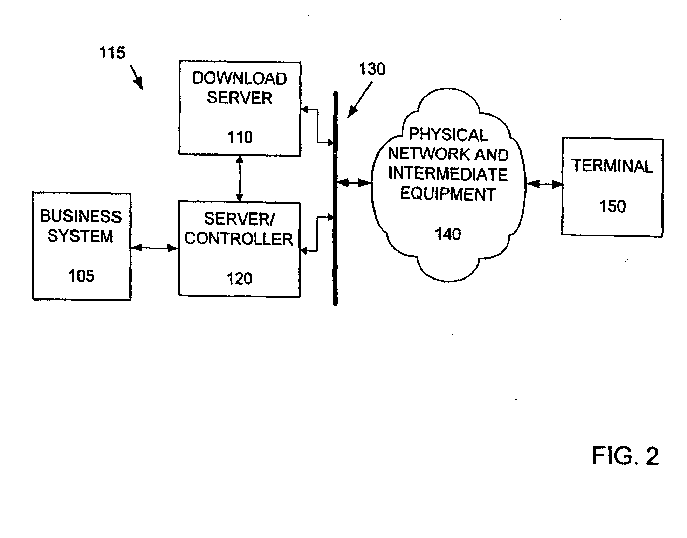

Figure 2 illustrates an overview of a digital network in accordance with the present invention. In a preferred embodiment, a system is provided for tuning a digital terminal 150 to access services. The terminal 150 may have one or more tuners. A server 120 which may be located at (or otherwise be in communication with) the headend 115 of a network (such as a cable or satellite television network), is provided which is in communication with the terminal 150 (via an interface 130, and physical network and intermediate equipment 140), for sending one or more digital messages to the terminal 150. The digital messages contain information associating each of one or more applications with a respective one or more channel(s). An application may be associated with more than one channel. The one or more tuners can tune to the respective one or more channel(s) associated with a particular application in response to a user request for that application in order to allow the terminal 150 to obtain at least one of a video service, an audio service, and a data content service from the tuned channel(s) for use by the application.

The server 120 may configure and authorize the terminals 150 under the control of a business system (such as a billing system) 105 by providing control data to the terminals.
A download server 110 may be provided which is in communication with at least one of the server 120 and the terminal 150 for enabling the downloading of authorized service(s) to the terminal 150. The download server 110 transmits the application data via the interface 130, and physical network and intermediate equipment 140 to a terminal 150. Note that the example terminal 150 is assumed to be part of a large terminal population. The application data may be broadcast to all terminals, but preferably can only be recovered by the terminals based on control data from the server 120. The server 120 may be a controller, a web server, or a proxy server. Authorization control of MAM configured terminals by a business system is described in commonly owned co-pending U.S. provisional patent application no. 60/161,230 filed October 22, 1999.

The information contained in the one or more digital messages may associate each of one or more applications with at least one of a respective program source and a respective service and may associate each of one or more channel numbers with at least one of said respective program source and said respective service.

The one or more applications may be provided on the terminal 150. The channel or channels may be tuned when one of (i) the requested application is enabled, (ii) before the requested application is enabled, or (iii) after the requested application is enabled.

In a preferred embodiment, the one or more digital messages may comprise two digital messages. A first digital message may contain information associating each of the one or more applications with at least one of: (i) one or more respective program sources; and (ii) one or more respective services. A second digital message may contain information associating each of one or more channel numbers with at least one of the respective program source and the respective service.

The first digital message may be a Virtual Object Message and the second digital message may be a Virtual Channel Message. The Virtual Object Message is part of the set of new or modified messages used for supporting the Multiple Applications Management (MAM) feature in digital networks. This message is described in more detail in Section 1.1.3 below.

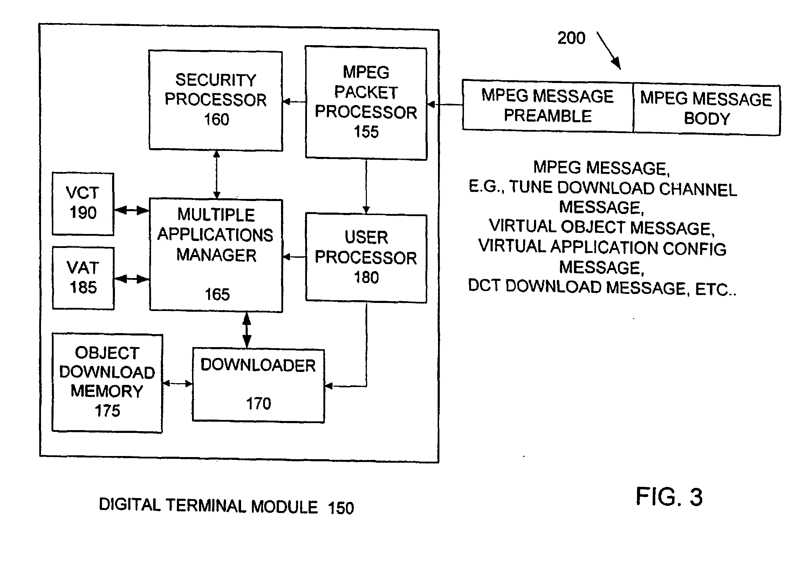

The invention also makes use of a newly created data structure associated with MAM, viz., the Virtual Application Table (VAT) which is received in the Virtual Object message by a digital terminal 150 operating in a MAM environment. Figure 3 illustrates the relevant components of a digital terminal 150 in which MAM functions are implemented. Figure 3 shows the terminal 150 receiving a digital message 200 from the server 120 of Figure 2. In Figure 3 the digital message 200 is shown as an MPEG message (packet). Use of MPEG packets is discussed herein only as an example. Any digital transport protocol may be used. An MPEG packet processor 155 processes the packet 200 to recover control and authorization data (commands) from the server 120 of Figure 2. The control and authorization data is provided to the security processor 160 and to a multiple applications manager (MAM) 165. The MAM 165 and other terminal functions can be implemented using any known software, firmware and/or hardware techniques. Control and authorization data can be stored at a memory associated with the terminal 150. The MPEG packet processor 155 can recover the application data and forward it to a downloader 170. The downloader 170 has an associated memory, download object memory 175, for storing the downloaded application data, including the applications themselves, such as code objects. "Downloading" refers to recovering and storing. For example, the downloader 170 may receive a "Tune Download Channel Message" contained in the MPEG packet 200 that commands it to download particular applications, and/or particular versions of the same application from a specific channel. The channel may be identified by a packet identifier in a known manner. A user processor 180 is provided for running software.

The VAT structure 185 provides fields in which one or more programming sources and/or services can be associated with an application. These programming sources or services also have entries in Virtual Channel Tables (VCTs) 190 which are received by digital terminals 150 via Virtual Channel Messages. The VCT 190 provides, in addition to other information, a virtual channel number (VCN) and a Carrier Definition Table (CDT) reference associated with each source or service specified in the VCT 190.

Information about all of the applications which a terminal 150 could acquire and/or enable is provided to the terminal 150 by using a Virtual Application Table 185. The VAT 185 consists of one or more VAT records. Each record of the VAT has various fields and contains information about a specific virtual application.

If a programming source or service is specified in the VAT 185 for an application, the Multiple Applications Manager 165 in the digital terminal 150 can look up the associated Virtual Channel Number from the Virtual Channel Table (VCT) 190.

Similarly, even when a virtual application is already running in the digital terminal 150, the MAM 165 can obtain one or more source identifiers or service numbers from the VAT 185, and tune to the corresponding channels specified in the VCT 190.

Accordingly, the first digital message 200 may include a Virtual Application Table (VAT) 185 containing one or more VAT records, each of which provides the association of each of said one or more applications with at least one of: (i) one or more respective program sources; and (ii) one or more respective services; and the second digital message 200 may include a Virtual Channel Table (VCT) 190 which provides the association of each of the one or more channel numbers with at least one of the respective program source or the respective service.

Each VAT record 185 may comprise one or more VCT_source_ID fields, each of which identifies the respective programming source associated with an application, and one or more VCT_application_ID fields, each of which identifies the respective service associated with an application.

A VAT record may not contain any VCT_source_ID fields. A value of zero in the VCT_source_ID field is an invalid value. Similarly, a VAT record may not contain any VCT_application_ID fields. A value of zero in the VCT_application_ID field is an invalid value. The VCT_source_ID and VCT_application_ID are described in detail in Table 3: Significant Fields in a "va_record" in a Virtual Object message.

The VCT_source_ID_count field and the VCT_app_ID_count fields in the control word of the VAT record, viz., virtual_application_control_word, specify how many VCT_source_ID fields or VCT_application_ID fields are present in the application's VAT record.

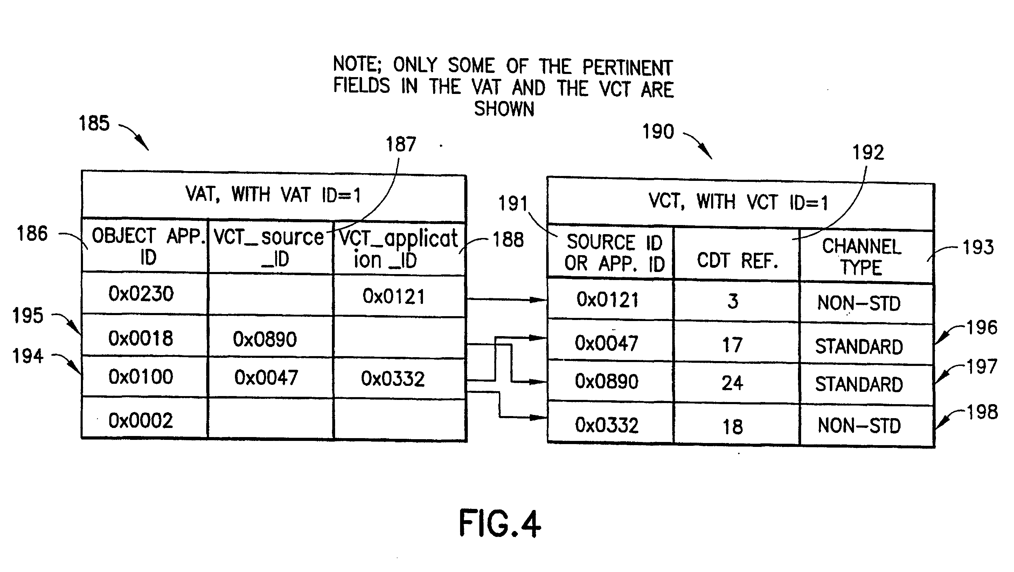

Figure 4 illustrates the relationship between the VAT 185 and the Virtual Channel Table (VCT) 190. It is noted that for purposes of simplicity, not all pertinent fields of the VAT and VCT are shown in Figure 4. Each source or service specified in the record of the VAT 185 may have a corresponding entry in the VCT 190 present in the digital terminal 150. The VCT 190 is normally obtained by the digital terminal by acquiring the Virtual Channel Message (from the server 120 of Figure 2) in the digital network. The VCT 190 provides the association of a source or service identifier with a channel that a digital terminal 150 can tune to for obtaining the video, audio and/or data content for a particular application.

For example, Figure 4 shows a VAT 185 having Object Application Identifiers 186, VCT_source_IDs 187, and VCT_application_IDs 188. A VCT 190 is shown having Source Identifiers or Application Identifiers 191, Carrier Definition Table (CDT) References 192, and Channel Types 193. In the example shown, VAT record 194 shows an application with an Object Application Identifier 0x0100, which has a VCT_source_ID of 0x0047 and a VCT_application_ID of 0x0332. As shown, VCT record 196 has a VCT Source Identifier 0x0047, which corresponds to.the VAT VCT_source_ID 0x0047. VCT record 198 has a Application Identifier 0x0332, which corresponds to the VAT VCT_application_ID 0x0332. Therefore, this application is associated with both CDT Reference 17, a standard channel having a Source Identifier of 0x0047 (which may provide, for example, inbound video service), and CDT reference 18, a non-standard channel having an Application Identifier 0x0332 (which may provide, for example, an out-of-band data service). In a second example, VAT record 195 shows an application having Object Application Identifier 0x0018 and a VCT_source_ID 0x0890. VCT record 197 has a VCT Source Identifier 0x0890, which corresponds to the VAT VCT_source_ID 0x0890. Therefore, this application is associated with CDT Reference 24, which is a standard channel.

The terminal 150 may be adapted to be operated in a Multiple Applications Management (MAM) environment.

The digital messages 200 can include an index or reference to an application code object on a network. The messages 200 also provide information regarding the specific channel or channels that the terminal 150 may tune to for acquiring video, audio, and/or data content associated with the application. Moreover, the digital messages 200 are capable of providing textual or graphical data describing the application (i.e. - a name or icon that can be used on the display menu by the terminal). Using the text strings and/or graphical data associated with applications, the Multiple Application Manager 165 can dynamically construct a list of authorized applications available for use on the terminal 150. The Multiple Applications Manager 165 can use the list to construct a menu (or display) of authorized applications available on the terminal 150 for user selection.

A user of a terminal 150 can activate this menu of applications using, e.g., a key on a remote control. The user can select an application to be launched from the menu (or any other user interface display such as an EPG or a web page). The MAM 165 obtains the source and/or service identifier(s), associated with the user's selection, from the VAT 185. The MAM 165 then uses the Virtual Channel Table 190 to obtain the channel(s) corresponding to the source and/or service identifiers associated with the application. The digital terminal 150 then tunes to the channel(s) before enabling the application and/or while running the application.

At least one of the one or more applications may be a virtual application. Virtual applications are applications that can be identified, downloaded, and enabled under the control of the MAM 165. Virtual applications can be transported to terminals 150 using any reliable transport protocol (e.g., DCT Download messages).

The information in the terminal 150 may be maintained in non-volatile memory, such that the information is preserved through resets of the terminal 150. Such information may include the information from the Virtual Application Tables 185, as well as the internal tables and authorization state information of the applications.

Since previously reserved or unused fields are used to specify the definitions of new messages, or for modifying the functionality of already existent messages, older terminals cannot acquire or understand them (e.g., the prior art terminal 20 of Figure 1). Thus, although the functioning of older terminals is not adversely affected, these terminals cannot take advantage of the newer MAM features.

At the same time, the present invention ensures that newer terminals running in a MAM environment can acquire, enable and run the traditional EPG application. Therefore, the invention allows for one application (e.g., an EPG) to be designated as a system wide default application authorized to run on all terminals in a digital network. This feature provides for backward compatibility with older terminals which may be present in the digital network and which are not capable of running in a MAM environment. Such older terminals are allowed to acquire, enable and run the traditional Electronic Program Guide (EPG) application as discussed in connection with Figure 1 above. Newer terminals running in a MAM environment perceive the system wide default application as a virtual application. However, the traditional EPG applications can be enabled on the newer terminals without any need to tune to a channel for a source or service.

For example, the VCT_source_ID_count field and the VCT_app_ID_count fields in the VAT record's control word, viz., virtual_application_control_word, may specify that there are no VCT_source_ID fields or VCT_application_ID fields present in the VAT record. Therefore, the traditional EPG application can run as before in a MAM environment.

The services and/or applications that can be accessed via the terminal 150 include at least one of email services, Internet services, news services, scripting language content, video-on-demand, web browsing, electronic programming guide, advertising, audio-on-demand, telephony services, stock prices, weather data, travel services and information, games, gambling, banking, shopping, voting, and the like.

The following is a detailed description of the messages and data structures which may be used in a preferred embodiment to implement the present invention:

### 1.1.1 The Newly Created DCII Message Preamble Decoder Conditional

A new enumeration "configured_for_MAM" has been defined and added as part of the DigiCipher® II (DCII) message preamble decoder condition functionality, using a previously reserved entry. DCII is a digital television standard proprietary to General Instrument Corporation of Horsham, Pennsylvania, USA. It should be appreciated that the invention can be implemented using other standards and hardware, and the following details are only provided as an example implementation.

This decoder condition may be prefixed to certain messages, such as the Virtual Object message and the Tune Download Channel message, sent by the controller to the terminals. (These messages are described later in Sections 1.1.3 and 1.1.4, respectively). Consequently, a terminal which has not been *configured_for_MAM* will not acquire a Virtual Application Table and become MAM enabled, nor tune to a download channel for acquiring a virtual application.

The selective use of this decoder conditional also allows older terminals that are not upgraded with MAM capable firmware platform code, to continue to operate without any detrimental side effects caused by the innovations involved with Multiple Applications Management.

### 1.1.2 The Newly Created Virtual Application Config Message

A new sub-command has been added to the Digital Cable Terminal (DCT) configuration message, by using a previously reserved value, and represents the Virtual Application Config message. A Virtual Application Information derived from the Virtual Application Config message is kept by the terminal in non-volatile memory, in order to preserve it through (warm) resets of the terminal.

The significant fields in the Virtual Application Config message are described in Table 1 below.

**Table 1:**

| **Significant Fields in a Virtual Application Config Message** | |
|---|---|
| Name of Field | Description |
| Config_for_multi_apps | This field, if set to "yes", configures a terminal for Multiple Application Management. The terminal is then considered to be in a *configured_for_MAM* state. |
| | |
| | The terminal will then be able to receive other messages that have the *configured_for_MAM* decoder condition in the DCII message preamble. |
| | |
| | If this field is cleared to "no", the terminal will no longer be *configured_for_MAM*, nor enabled for MAM. |
| home_VAT_ID | This field identifies a Virtual Application Table (VAT) which must be used by the terminal as the terminal's default VAT (*home_VAT*). |
| | |
| | (The Virtual Application table is described in 1.1.3). |
| Default_application_ID | This field identifies an application that will be the default virtual application for the terminal. |
| | |
| | (This ID correlates to the *object_application_ID* of a virtual application in the home_VAT). |
| Volatile_memory_config | This specifies the number of bytes of volatile memory that the terminal allocates and make available for the download of virtual applications other than the default virtual application. |

### 1.1.3 The Newly Created Virtual Object Message

A new DCII message type has been created by using a previously reserved value, and represents the Virtual Object message. A Virtual Object message is used to deliver a Virtual Application Table to a terminal. This message is carried in the network stream and may be sent broadcast-addressed, multicast-addressed or singlecast-addressed to the terminal, using segmentation overlay.

The controller (e.g., the Digital Access Controller (DAC)) prefixes the virtual object message with a *configured_for_MAM* decoder condition in the message preamble. Therefore, only terminals which are configured_for_MAM will process this message.

This ensures that terminals, which are not running a MAM capable firmware (platform code), will fail the decoder condition test, and will not acquire a Virtual Application Table.

A terminal is considered to be in a MAM enabled state if it is *configured_for_MAM* and has completely acquired its *homs_VAT* (described in Section 1.1.2 above). Information derived from the Virtual Object message, including the Virtual Application Table (VAT), is kept by the terminal in non-volatile memory, in order to preserve it through (warm) resets of the terminal.
The significant fields in the Virtual Object message are described in Table 2.

**Table 2:**

| **Significant Fields in a Virtual Object Message** | |
|---|---|
| Name of Field | Description |
| table_subtype | This field can be used to specify that this Virtual Object message contains a Virtual Application Table (VAT). |
| VAT_ID | This field specifies an identifier for the VAT contained in this message. |
| | |
| | The ID maybe the same as the *home_VAT_ID* from the Virtual Application Config message described in Section 1.1.2). |
| sequence_number | This field serves as a version number for the VAT. |
| | |
| | If the *sequence_number* for the VAT included in this message is different from the *sequence_number* associated with the VAT with the same *VAT_ID* already present in the terminal, then it implies that the VAT has changed. |
| number_of_va_records | This field specifies how many VAT records are present in the Virtual Application Table (VAT) included in this message. |
| va_record | This is an array of VAT records constituting the Virtual Application Table (VAT). |
| | |
| | Each record identifies a virtual application. One of the records may identify the virtual application whose *default_application_ID* was given in the Virtual Application Config message (described in Section 1.1.2). |

Table 3 describes the significant fields in each record of a Virtual Application Table (VAT).

**Table 3**

| **Significant Fields in a "va_record" in a Virtual Object message** | |
|---|---|
| Name of Field | Description |
| Virtual_application_control_word | This field specifies which other optional fields are present in the rest of the va_record. The significant sub-fields of this field are described in a separate table. |
| Object_application_ID | This field contains a numeric identifier for the virtual application. The identifier must be unique between all va_records within a VAT. |
| VCT_source_ID | This is a list of identifiers of programming "sources" which are associated with the virtual application. The terminal may use these values to obtain a virtual channel to be tuned to before enabling the virtual application. |
| VCT_application_ID | This is a list of identifiers of "services" associated with the virtual application. The values and usage are the same as described for *VCT_source_ID* above. |
| Object_version | This is a list of version numbers for each of the versions, which can exist, of a virtual application. The terminal will enable the highest version, which can be authorized. |
| Virtual_application_tier | This is a list of authorization tiers for the virtual application, one per version. (All versions of an application may have the same or different tiers). This specifies the authorization requirements for the versions of the virtual application. |
| Virtual_name | This is a multi-lingual text string of printable ASCII characters. The name can be used for on-screen displays at the terminal. |

The following table describes the significant fields in the control word in the va_record for a virtual application in the Virtual Application Table (VAT).

**Table 4:**

| **Significant fields in a virtual_application_control_word" of a "va_record" in the VAT** | |
|---|---|
| **Name of Field** | **Description** |
| version_count | Specifies the number of object versions existing for this virtual application. |
| VCT_source_ID_count | Specifies the number of VCT_source_ID fields present in the record. |
| VCT_app_ID_count | Specifies the number of VCT_application_ID fields present in the record. |
| download_channel_present | Specifies whether a download_channel is present or not in the record. |
| virtual_name_present | Specifies whether a virtual_name for the application is present or not in the record. |

### 1.1.4 The Modified Definition of the Tune Download Channel Message

This message, which is a sub-command of the DCT Download Control message, has been modified.

The definition of the *tune_download_function_field* has been enhanced. A previously reserved value has been re-defined to specify whether the message applies to a "virtual_application" or to a fixed or standard application. The Tune Download Channel message for all virtual applications (except for a system wide default application) must contain the *configured_for_MAM* decoder condition in the message preamble. Therefore, only terminals, which are configured_for_MAM, will process this message.

This ensures that terminals which are not running a MAM capable firmware platform code will fail the decoder condition test and will not acquire a virtual application.

If a virtual application is specified in the Tune Download Channel message, the virtual application is identified by the *obj_application_ID* field in the message. This virtual application then correlates to the one identified by the *object_application_ID* field in one of the records of the Virtual Application Table (the *home_VAT*) maintained by the Multiple Application Manager.

Moreover, the *obj_application_ID*, *tune_object_name* and *tune_object_version* in the Tune Download Channel message should correlate with the *application_ID, object_name* and *object_version* in the DCT Download message for the virtual application. The Tune Download Channel message for the system wide default virtual application is an exception. The *configured_for_MAM* decoder condition is not used for this default application. Consequently, all terminals will always be able to acquire the system wide default application.

### 1.1.5 The Modified Functionality of the Download Control Message

This message, which is also a sub-command of the DCT Download Control message, has modified functionality as an implication of the invention.

Since the Multiple Application Manager has the information (via the Virtual Application Table) about which applications must be enabled, disabled, purged, etc., the Downloader can no longer directly act on the receipt of the Download Control sub-command message. Therefore, if MAM is enabled on a terminal, the "disable", "delete" and "purge" functions specified in a DCT Download Control sub-command message, for virtual applications, are ignored by the Downloader module in the terminal.

In addition, if MAM is enabled, the "enable" function specified in a DCT Download Control sub-command message for a virtual application causes the Downloader to interrogate the Multiple Application Manager module to see if the application should indeed be enabled. The MAM responds back with information whether to enable or disable the virtual application.

### 1.1.6 The Modified Functionality of the Virtual Channel Config Message

This message, which is a sub-command of the DCT Config message, has modified functionality as an implication of the invention.

If MAM is enabled, the digital terminal will disregard the *turnon_VC_defined, turnon_VC, turnoff_VC_defined* and *turnoff_VC* fields specified by this message if the default virtual application has a defined *VCT_source_ID.* In this case, the terminal will tune to the channel associated with the *VCT_source_ID* given for the default virtual application.

It should be appreciated that the above described implementation of the invention using the DCII standard is provided herein as an example only, and other standards which are known or to be developed may be used to implement the invention.

It should now be appreciated that the present invention provides a system architecture for allowing specific sources or services to be associated with virtual applications. A terminal can tune to channels associated with these sources or services before enabling the application, or while the application is running. The application can therefore obtain dynamic video, audio and/or data content to provide a feature rich experience to a human user of a digital communication terminal.

Systems implementing the invention allow the manner in which applications associate themselves with specific sources and/or services to be methodically managed. The invention can also be used to implement features such as associating programming sources or other services with email services, Internet services, news services, scripting language content, video-on-demand, web browsing, electronic programming guide, audio-on-demand, telephony services, stock prices, weather data, travel services and information, games, gambling, banking, shopping, voting, and the like.

Although the invention has been described in connection with various illustrated embodiments, numerous modifications and adaptations may be made thereto without departing from the scope of the invention as set forth in the claims.

## Claims

1. A method of tuning a digital terminal to access services, comprising the steps of:
sending one or more digital messages to the terminal from a server, said one or more digital messages containing information associating each of one.or more applications with a respective one or more channel(s);
tuning to the respective one or more channel(s) associated with a particular application in response to a user request for that application; and
obtaining at least one of a video service, an audio service, and a data content service from the tuned channel(s) for use by the application.

2. A method in accordance with claim 1, wherein the server is one of a controller, a web server, or a proxy server.

3. A method in accordance with one of claims 1 or 2, wherein the information contained in the one or more digital messages associates each of one or more applications with at least one of a respective program source and a respective service and associates each of one or more channel numbers with at least one of said respective program source and said respective service.

4. A method in accordance with one of the preceding claims, wherein:
the one or more applications are provided on the terminal; and
the channel is tuned when one of (i) the requested application is enabled, (ii) before the requested application is enabled, or (iii) after the requested application is enabled.

5. A method in accordance with one of the preceding claims, wherein the step of sending one or more digital messages further comprises the steps of:
sending a first digital message which contains information associating each of said one or more applications with at least one of: (i) one or more respective program sources; and (ii) one or more respective services; and
sending a second digital message which contains information associating each of one or more channel numbers with at least one of said respective program source and said respective service.

6. A method in accordance with claim 5, wherein:
the first digital message is a Virtual Object Message; and
the second digital.message is a Virtual Channel Message.

7. A method in accordance with one of claims 5 or 6, wherein the terminal is adapted to be operated in a Multiple Applications Management (MAM) environment.

8. A method in accordance with one of claims 5 to 7, wherein:
the first digital message includes a Virtual Application Table (VAT) containing one or more VAT records, each of which provides the association of each of said one or more applications with at least one of: (i) one or more respective program sources; and (ii) one or more respective services; and
the second digital message includes a Virtual Channel Table (VCT) which provides the association of each of said one or more channel numbers with at least one of said respective program source or said respective service.

9. A method in accordance with claim 8, wherein each VAT record comprises:
one or more VCT_source_ID fields, each of which identifies the respective programming source associated with an application; and
one or more VCT_application_ID fields, each of which identifies the respective service associated with an application.

10. A method in accordance with one of the preceding claims, comprising the further step of preparing a list of authorized applications available for use on the terminal.

11. A method in accordance with claim 10, comprising the further step of preparing a menu of authorized applications available on the terminal for user selection.

12. A method in accordance with one of the preceding claims, wherein at least one of said one or more applications is a virtual application.

13. A method in accordance with one of the preceding claims, comprising the further step of maintaining the information in non-volatile memory, such that said information is preserved through resets of the terminal.

14. A method in accordance with one of the preceding claims, wherein one application is designated as a system wide default application authorized to run on all terminals in a digital network.

15. A method in accordance with one of the preceding claims, wherein said services include at least one of email services, Internet services, news services, scripting language content, video-on-demand, web browsing, electronic programming guide, advertising, audio-on-demand, telephony services, stock prices, weather data, travel services and information, games, gambling, banking, shopping, and voting.

16. A method in accordance with one of the preceding claims, wherein said applications include at least one of email services, Internet services, news services, scripting language content, video-on-demand, web browsing, electronic programming guide, advertising, audio-on-demand, telephony services, stock prices, weather data, travel services and information, games, gambling, banking, shopping, and voting.

17. A system for tuning a digital terminal to access services, comprising:
a terminal having one or more tuners;
a server in communication with the terminal for sending one or more digital messages to the terminal, said one or more digital messages containing information associating each of one or more applications with a respective one or more channel(s); wherein:
the one or more tuners can tune to the respective one or more channel(s) associated with a particular application in response to a user request for that application; and
the terminal can obtain at least one of a video service, an audio service, and a data content service from the tuned channel(s) for use by the application.

18. A system in accordance with claim 17, wherein the server is one of a controller, a web server, or a proxy server.

19. A system in accordance with one of claims 17 or 18, wherein the information contained in the one or more digital messages associates each of one or more applications with at least one of a respective program source and a respective service and associates each of one or more channel numbers with at least one of said respective program source and said respective service.

20. A system in accordance with one of claims 17 to 19,
wherein:
the one or more applications are provided on the terminal; and
the channel is tuned when one of (i) the requested application is enabled, (ii) before the requested application is enabled, or (iii) after the requested application is enabled.

21. A system in accordance with one of claims 17 to 20, wherein the one or more digital messages further comprises:
a first digital message which contains information associating each of said one or more applications with at least one of: (i) one or more respective program sources; and (ii) one or more respective services; and
a second digital message which contains information associating each of one or more channel numbers with at least one of said respective program source and said respective service.

22. A system in accordance with claim 21, wherein:
the first digital message is a Virtual Object Message; and
the second digital message is a Virtual Channel Message.

23. A system in accordance with one of claims 21 to 22, wherein the terminal is adapted to be operated in a Multiple Applications Management (MAM) environment.

24. A system in accordance with one of claim 21 to 23, wherein:
the first digital message includes a Virtual Application Table (VAT) containing one or more VAT records, each of which provides the association of each of said one or more applications with at least one of: (i) one or more respective program sources; and (ii) one or more respective services; and
the second digital message includes a Virtual Channel Table (VCT) which provides the association of each of said one or more channel numbers with at least one of said respective program source or said respective service.

25. A system in accordance with claim 24, wherein each VAT record comprises:
one or more VCT_source_ID fields, each of which identifies the respective programming source associated with an application; and
one or more VCT_application_ID fields, each of which identifies the respective service associated with an application.

26. A system in accordance with one of claims 17 to 25, wherein a list of authorized applications available for use on the terminal is prepared.

27. A system in accordance with claim 26, further comprising a menu of authorized applications available on the terminal for user selection.

28. A system in accordance with one of claims 17 to 27, wherein at least one of said one or more applications is a virtual application.

29. A system in accordance with one of claims 17 to 28, wherein the information is maintained in non-volatile memory, such that said information is preserved through resets of the terminal.

30. A system in accordance with one of claims 17 to 29, wherein one application is designated as a system wide default application authorized to run on all.terminals in a digital network.

31. A system in accordance with one of claims 17 to 30, wherein said services include at least one of email services, Internet services, news services, scripting language content, video-on-demand, web browsing, electronic programming guide, advertising, audio-on-demand, telephony services, stock prices, weather data, travel services and information, games, gambling, banking, shopping, and voting.

32. A system in accordance with one of claims 17 to 31, wherein said applications include at least one of email services, Internet services, news services, scripting language content, video-on-demand, web browsing, electronic programming guide, advertising, audio-on-demand, telephony services, stock prices, weather data, travel services and information, games, gambling, banking, shopping, and voting.

## Patentansprüche

1. Ein Verfahren zum Abstimmen eines digitalen Terminals, um auf Dienste zuzugreifen, das folgende Schritte beinhaltet:
Senden von einer oder mehreren digitalen Nachricht(en) an das Terminal von einem Server, wobei die eine oder mehreren digitale(n) Nachricht(en) Informationen enthält/enthalten, die jede der einen oder mehreren Anwendung(en) mit einem oder mehreren jeweiligen Kanal/Kanälen verbinden;
Abstimmen auf den/die jeweiligen einen oder mehreren Kanal/Kanäle, der/die mit einer bestimmten Anwendung als Reaktion auf eine Benutzeranfrage für diese Anwendung verbunden ist/sind; und
Erhalten von mindestens entweder einem Videodienst, einem Audiodienst oder einem Dateninhaltdienst von dem/den abgestimmten Kanal/Kanälen zur Verwendung durch die Anwendung.

2. Verfahren gemäß Anspruch 1, wobei der Server entweder ein Kontroller, ein Web-Server oder ein Proxy-Server ist.

3. Verfahren gemäß Anspruch 1 oder 2, wobei die in der einen oder in den mehreren digitalen Nachricht(en) enthaltenen Informationen jede der einen oder mehreren Anwendung(en) mit mindestens entweder einer jeweiligen Programmquelle oder einem jeweiligen Dienst verbinden, und jede der einen oder mehreren Kanalnummer(n) mit mindestens entweder der jeweiligen Programmquelle oder dem jeweiligen Dienst verbinden.

4. Verfahren gemäß einem der vorhergehenden Ansprüche, wobei:
die eine oder mehreren Anwendung(en) auf dem Terminal bereitgestellt sind; und
der Kanal abgestimmt wird, wenn entweder (i) die angeforderte Anwendung freigegeben wird, (ii) bevor die angeforderte Anwendung freigegeben wird, oder (iii) nachdem die angeforderte Anwendung freigeben wurde.

5. Verfahren gemäß einem der vorhergehenden Ansprüche, wobei der Schritt des Sendens von einer oder mehreren digitalen Nachricht(en) ferner folgende Schritte beinhaltet:
Senden einer ersten digitalen Nachricht, die Informationen enthält, die jede der einen oder mehreren Anwendung(en) mit mindestens einem der Folgenden verbinden: (i) eine oder mehrere jeweilige Programmquelle(n); und (ii) ein oder mehrere jeweilige(r) Dienst(e); und
Senden einer zweiten digitalen Nachricht, die Informationen enthält, die jede der einen oder mehreren Kanalnummer(n) mit mindestens entweder der jeweiligen Programmquelle oder dem jeweiligen Dienst verbinden.

6. Verfahren gemäß Anspruch 5, wobei:
die erste digitale Nachricht eine virtuelle Objektnachricht ist; und
die zweite digitale Nachricht eine virtuelle Kanalnachricht ist.

7. Verfahren gemäß Anspruch 5 oder 6, wobei das Terminal ausgeführt ist, um in einer Mehrfachanwendungsverwaltung-Umgebung (MAM-Umgebung) betrieben zu werden.

8. Verfahren gemäß einem der Ansprüche 5 bis 7, wobei:
die erste digitale Nachricht eine virtuelle Anwendungstabelle (VAT) umfasst, die einen oder mehrere VAT-Datensatz/-sätze enthält, von denen jeder die Verbindung von jedem der einen oder mehreren Anwendung(en) mit mindestens einem der Folgenden bereitstellt: (i) eine(n) oder mehrere jeweilige Programmquette(n); und (ii) eine(n) oder mehrere jeweilige(n) Dienst(e); und
die zweite digitale Nachricht eine virtuelle Kanaltabelle (VCT) umfasst, die die Verbindung von jeder der einen oder mehreren Kanalnummer(n) mit mindestens entweder der jeweiligen Programmquelle oder dem jeweiligen Dienst bereitstellt.

9. Verfahren gemäß Anspruch 8, wobei jeder VAT-Datensatz Folgendes beinhaltet:
ein oder mehrere VCT_source_ ID-Feld(er), von denen jedes die jeweilige mit einer Anwendung verbundene Programmierquelle identifiziert; und
ein oder mehrere VCT_application_ID-Feld(er), von denen jedes den jeweiligen mit einer Anwendung verbundenen Dienst identifiziert.

10. Verfahren gemäß einem der vorhergehenden Ansprüche, das den weiteren Schritt des Vorbereitens einer Liste von autorisierten Anwendungen beinhaltet, die zur Verwendung auf dem Terminal verfügbar sind.

11. Verfahren gemäß Anspruch 10, das den weiteren Schritt des Vorbereitens eines Menüs von autorisierten Anwendungen beinhaltet, die zur Auswahl durch den Benutzer auf dem Terminal verfügbar sind.

12. Verfahren gemäß einem der vorhergehenden Ansprüche, wobei mindestens eine der einen oder mehreren Anwendung(en) eine virtuelle Anwendung ist.

13. Verfahren gemäß einem der vorhergehenden Ansprüche, das den weiteren Schritt des Beibehaltens der Informationen in einem nichtflüchtigen Speicher beinhaltet, so dass die Informationen durch Rücksetzen des Terminals erhalten werden.

14. Verfahren gemäß einem der vorhergehenden Ansprüche, wobei eine Anwendung als eine systemweite, vorgegebene Anwendung bezeichnet ist, die autorisiert ist, um auf allen Terminals in einem Digitalnetz zu laufen.

15. Verfahren gemäß einem der vorhergehenden Ansprüche, wobei die Dienste mindestens entweder Emaildienste, Internetdienste, Nachrichtendienste, Scripting-Spracheninhalt, Videoabruf, Webbrowsing, elektronischen Programmierführer, Werbung, Audioabruf, Fernsprechdienste, Aktienkurse, Wetterdaten, Reisedienste und -informationen, Spiele, Glücksspiele, Bankgeschäfte, Einkaufen oder Wählen umfassen.

16. Verfahren gemäß einem der vorhergehenden Ansprüche, wobei die Anwendungen mindestens entweder Emaildienste, Internetdienste, Nachrichtendienste, Scripting-Spracheninhalt, Videoabruf, Webbrowsing, elektronischen Programmierführer, Werbung, Audioabruf, Fernsprechdienste, Aktienkurse, Wetterdaten, Reisedienste und -informationen, Spiele, Glücksspiele, Bankgeschäfte, Einkaufen oder Wählen umfassen.

17. Ein System zum Abstimmen eines digitalen Terminals, um auf Dienste zuzugreifen, das Folgendes beinhaltet:
ein Terminal, das einen oder mehrere Tuner aufweist;
einen Server, der mit dem Terminal verbunden ist, um eine oder mehrere digitale Nachricht(en) an das Terminal zu senden, wobei eine oder mehrere digitale Nachricht(en) Informationen enthält/enthalten, die jede der einen oder mehreren Anwendung(en) mit einem oder mehreren jeweiligen Kanal/Kanälen verknüpfen; wobei:
der eine oder mehrere Tuner auf den/die jeweiligen einen oder mehreren Kanal/Kanäle, der/die mit einer bestimmten Anwendung als Reaktion auf eine Benutzeranfrage für diese Anwendung verbunden ist/sind, abstimmen kann/können; und
das Terminal mindestens entweder einen Videodienst, einen Audiodienst oder einen Dateninhaltdienst von dem/den abgestimmten Kanal/Kanälen zur Verwendung durch die Anwendung erhalten kann.

18. System gemäß Anspruch 17, wobei der Server entweder ein Kontroller, ein Web-Server oder ein Proxy-Server ist.

19. System gemäß Anspruch 17 oder 18, wobei die in der einen oder in den mehreren digitalen Nachricht(en) enthaltenen Informationen jede der einen oder mehreren Anwendung(en) mit mindestens entweder einer jeweiligen Programmquelle oder einem jeweiligen Dienst verbinden und jede der einen oder mehreren Kanalnummer(n) mit mindestens entweder der jeweiligen Programmquelle oder dem jeweiligen Dienst verbinden.

20. System gemäß einem der Ansprüche 17 bis 19, wobei:
die eine oder mehrere Anwendung(en) auf dem Terminal bereitgestellt sind; und
der Kanal abgestimmt wird, wenn entweder (i) die angeforderte Anwendung freigegeben wird, (ii) bevor die angeforderte Anwendung freigegeben wird, oder (iii) nachdem die angeforderte Anwendung freigeben wurde.

21. System gemäß einem der Ansprüche 17 bis 20, wobei die eine oder mehreren digitale(n) Nachricht(en) ferner Folgendes beinhaltet/beinhalten:
eine erste digitale Nachricht, die Informationen enthält, die jede der einen oder mehreren Anwendung(en) mit mindestens einem der Folgenden verbinden: (i) eine oder mehrere jeweilige Programmquelle(n); und (ii) einen oder mehrere jeweilige(n) Dienst(e); und
eine zweite digitale Nachricht, die Informationen enthält, die jede der einen oder mehreren Kanalnummer(n) mit mindestens entweder der jeweiligen Programmquelle oder dem jeweiligen Dienst verbinden.

22. System gemäß Anspruch 21, wobei:
die erste digitale Nachricht eine virtuelle Objektnachricht ist; und
die zweite digitale Nachricht eine virtuelle Kanalnachricht ist.

23. System gemäß einem der Ansprüche 21 bis 22, wobei das Terminal ausgeführt ist, um in einer Mehrfachanwendungsverwaltung-Umgebung (MAM-Umgebung) betrieben zu werden.

24. System gemäß einem der Ansprüche 21 bis 23, wobei:
die erste digitale Nachricht eine virtuelle Anwendungstabelle (VAT) umfasst, die einen oder mehrere VAT-Datensatz/-sätze enthält, von denen jeder die Verbindung von jedem der einen oder mehreren Anwendung(en), mit mindestens einem der Folgenden bereitstellt: (i) eine oder mehrere jeweilige Programmquelle(n); und (ii) eine(n) oder mehrere jeweilige(n) Dienst(e); und
die zweite digitale Nachricht eine virtuelle Kanaltabelle (VCT) umfasst, die die Verbindung von jeder der einen oder mehreren Kanalnummer(n) mit mindestens entweder der jeweiligen Programmquelle oder dem jeweiligen Dienst bereitstellt.

25. System gemäß Anspruch 24, wobei jeder VAT-Datensatz Folgendes beinhaltet:
ein oder mehrere VCT_source_ ID-Feld(er), von denen jedes die jeweilige mit einer Anwendung verbundene Programmierquelle identifiziert; und
ein oder mehrere VCT_application_ID-Feld(er), von denen jedes den jeweiligen mit einer Anwendung verbundenen Dienst identifiziert.

26. System gemäß einem der Ansprüche 17 bis 25, wobei eine Liste von autorisierten Anwendungen vorbereitet wird, die zur Verwendung auf dem Terminal verfügbar sind.

27. System gemäß Anspruch 26, das ferner ein Menü von autorisierten Anwendungen beinhaltet, die zur Auswahl durch den Benutzers auf dem Terminal verfügbar sind.

28. System gemäß einem der Ansprüche 17 bis 27, wobei mindestens eine der einen oder mehreren Anwendung(en) eine virtuelle Anwendung ist.

29. System gemäß einem der Ansprüche 17 bis 28, wobei die Informationen in einem nichtflüchtigen Speicher beibehalten wird, so dass die Informationen durch Rücksetzen des Terminals erhalten werden.

30. System gemäß einem der Ansprüche 17 bis 29, wobei eine Anwendung als eine systemweite, vorgegebene Anwendung bezeichnet ist, die autorisiert ist, um auf allen Terminals in einem Digitalnetz zu laufen.

31. System gemäß einem der Ansprüche 17 bis 30, wobei die Dienste mindestens entweder Emaildienste, Internetdienste, Nachrichtendienste, Scripting-Spracheninhalt, Videoabruf, Webbrowsing, elektronischen Programmierführer, Werbung, Audioabruf, Fernsprechdienste, Aktienkurse, Wetterdaten, Reisedienste und -informationen, Spiele, Glücksspiele, Bankgeschäfte, Einkaufen oder Wählen umfassen.

32. System gemäß einem der Ansprüche 17 bis 31, wobei die Anwendungen mindestens entweder Emaildienste, Internetdienste, Nachrichtendienste, Scripting-Sprachinhalt, Videoabruf, Webbrowsing, elektronischen Programmierführer, Werbung, Audioabruf, Fernsprechdienste, Aktienkurse, Wetterdaten, Reisedienste und -informationen, Spiele, Glücksspiele, Bankgeschäfte, Einkaufen oder Wählen umfassen.

## Revendications

1. Un procédé pour syntoniser un terminal numérique pour accéder à des services, comportant les étapes de :
envoyer un ou des messages numériques au terminal à partir d'un serveur, ledit ou lesdits messages numériques contenant des informations associant l'application ou chacune des applications à un canal ou des canaux respectifs ;
se syntoniser sur le canal ou les canaux respectifs associés à une application particulière en réponse à une requête utilisateur concernant cette application ; et
obtenir du canal ou des canaux syntonisés au moins soit un service vidéo, soit un service audio, soit un service de contenu de données destiné à être utilisé par l'application.

2. Un procédé conformément à la revendication 1, dans lequel le serveur est soit un contrôleur, soit un serveur Web, soit un serveur mandataire.

3. Un procédé conformément à l'une des revendications 1 et 2, dans lequel les informations contenues dans le ou les messages numériques associent l'application ou chacune des applications à au moins soit une source de programme respective, soit un service respectif et associent le numéro ou chacun des numéros de canaux à au moins soit ladite source de programme respective, soit ledit service respectif.

4. Un procédé conformément à l'une des revendications précédentes, dans lequel :
l'application ou les applications sont fournies sur le terminal ; et
le canal est syntonisé soit (i) lorsque l'application demandée est validée, soit (ii) avant que l'application demandée soit validée, soit (iii) après que l'application demandée a été validée.

5. Un procédé conformément à l'une des revendications précédentes, dans lequel l'étape d'envoyer un ou des messages numériques comporte de plus les étapes de :
envoyer un premier message numérique qui contient des informations associant ladite application ou chacune desdites applications à au moins : soit (i) une ou des sources de programmes respectives ; soit (ii) un ou des services respectifs ; et
envoyer un deuxième message numérique qui contient des informations associant le numéro de canal ou chacun des numéros de canaux à au moins soit ladite source de programme respective, soit ledit service respectif.

6. Un procédé conformément à la revendication 5, dans lequel :
le premier message numérique est un Message Objet Virtuel ; et
le deuxième message numérique est un Message Canal Virtuel.

7. Un procédé conformément à l'une des revendications 5 et 6, dans lequel le terminal est adapté pour être amené à fonctionner dans un environnement de Gestion d'Applications Multiples (MAM).

8. Un procédé conformément à l'une des revendications 5 à 7, dans lequel :
le premier message numérique comprend un Tableau d'Applications Virtuelles (VAT) contenant un ou des enregistrements de VAT, chacun d'eux fournissant l'association de ladite application ou chacune desdites applications à au moins : soit (i) une ou des sources de programmes respectives ; soit (ii) un ou des services respectifs ; et
le deuxième message numérique comprend un Tableau de Canaux Virtuels (VCT) qui fournit l'association dudit numéro de canal ou chacun desdits numéros de canaux à au moins soit ladite source de programme respective, soit ledit service respectif.

9. Un procédé conformément à la revendication 8, dans lequel chaque enregistrement de VAT comporte :
un ou des champs VCT_source_ID, chacun d'eux identifiant la source de programmation respective associée à une application ; et
un ou des champs VCT_application_ID, chacun d'eux identifiant le service respectif associé à une application.

10. Un procédé conformément à l'une des revendications précédentes, comportant l'étape supplémentaire de préparer une liste d'applications autorisées disponibles pour être utilisées sur le terminal.

11. Un procédé conformément à la revendication 10, comportant l'étape supplémentaire de préparer un menu d'applications autorisées disponibles sur le terminal pour être sélectionnées par l'utilisateur.

12. Un procédé conformément à l'une des revendications précédentes, dans lequel au moins soit ladite application, soit lesdites applications sont des applications virtuelles.

13. Un procédé conformément à l'une des revendications précédentes, comportant l'étape supplémentaire de garder les informations dans de la mémoire non volatile, de telle sorte que lesdites informations sont conservées pendant des redémarrages du terminal.

14. Un procédé conformément à l'une des revendications précédentes, dans lequel une application est désignée comme étant une application par défaut à l'échelle du système autorisée à être exécutée sur tous les terminaux dans un réseau numérique.

15. Un procédé conformément à l'une des revendications précédentes, dans lequel lesdits services comprennent au moins un service parmi des services email, des services Internet, des services actualités, de contenu de langage de scriptage, de vidéo à la demande, de navigation sur le Web, de guide de programmation électronique, de publicité, d'audio à la demande, des services de téléphonie, de bourse, de météo, des services et informations voyage, de jeux, de jeux d'argent, de finance, de shopping et de vote.

16. Un procédé conformément à l'une des revendications précédentes, dans lequel lesdites applications comprennent au moins un service parmi des services email, des services Internet, des services actualités, de langage de scriptage, de vidéo à la demande, de navigation sur le Web, de guide de programmation électronique, de publicité, d'audio à la demande, des services de téléphonie, de bourse, de météo, des services et informations voyage, de jeux, de jeux d'argent, de finance, de shopping et de vote.

17. Un système pour syntoniser un terminal numérique pour accéder à des services, comportant :
un terminal ayant un ou des syntoniseurs ;
un serveur en communication avec le terminal pour envoyer un ou des messages numériques au terminal, ledit ou lesdits messages numériques contenant des informations associant l'application ou chacune des applications à un canal ou des canaux respectifs ; dans lequel :
le ou les syntoniseurs peuvent se syntoniser sur le canal ou les canaux respectifs associés à une application particulière en réponse à une requête utilisateur concernant cette application ; et
le terminal peut obtenir du canal ou des canaux syntonisés au moins soit un service vidéo, soit un service audio, soit un service de contenu de données destiné à être utilisé par l'application.

18. Un système conformément à la revendication 17, dans lequel le serveur est soit un contrôleur, soit un serveur Web, soit un serveur mandataire.

19. Un système conformément à l'une des revendications 17 et 18, dans lequel les informations contenues dans le ou les messages numériques associent l'application ou chacune des applications à au moins soit une source de programme respective, soit un service respectif et associent le numéro de canal ou chacun des numéros de canaux à au moins soit ladite source de programme respective, soit ledit service respectif.

20. Un système conformément à l'une des revendications 17 à 19, dans lequel :
la ou les applications sont fournies sur le terminal ; et
le canal est syntonisé soit (i) lorsque l'application demandée est validée, soit (ii) avant que l'application demandée soit validée, soit (iii) après que l'application demandée a été validée.

21. Un système conformément à l'une des revendications 17 à 20, dans lequel le ou les messages numériques comportent de plus :
un premier message numérique qui contient des informations associant ladite application ou chacune desdites applications à au moins : soit (i) une ou des sources de programmes respectives ; soit (ii) un ou des services respectifs ; et
un deuxième message numérique qui contient des informations associant le numéro de canal ou chacun des numéros de canaux à au moins soit ladite source de programme respective, soit ledit service respectif.

22. Un système conformément à la revendication 21, dans lequel :
le premier message numérique est un Message Objet Virtuel ; et
le deuxième message numérique est un Message Canal Virtuel.

23. Un système conformément à l'une des revendications 21 à 22, dans lequel le terminal est adapté pour être amené à fonctionner dans un environnement de Gestion d'Applications Multiples (MAM).

24. Un système conformément à l'une des revendications 21 à 23, dans lequel :
le premier message numérique comprend un Tableau d'Applications Virtuelles (VAT) contenant un ou des enregistrements de VAT, chacun d'eux fournissant l'association de ladite application ou chacune desdites applications à au moins : soit (i) une ou des sources de programmes respectives ; soit (ii) un ou des services respectifs ; et
le deuxième message numérique comprend un Tableau de Canaux Virtuels (VCT) qui fournit l'association dudit numéro de canal ou chacun desdits numéros de canaux à au moins soit ladite source de programme respective, soit ledit service respectif.

25. Un système conformément à la revendication 24, dans lequel chaque enregistrement de VAT comporte :
un ou des champs VCT_source_ID, chacun d'eux identifiant la source de programmation respective associée à une application ; et
un ou des champs VCT_application_ID, chacun d'eux identifiant le service respectif associé à une application.

26. Un système conformément à l'une des revendications 17 à 25, dans lequel une liste d'applications autorisées disponibles pour être utilisées sur le terminal est préparée.

27. Un système conformément à la revendication 26, comportant de plus un menu d'applications autorisées disponibles sur le terminal pour être sélectionnées par l'utilisateur.

28. Un système conformément à l'une des revendications 17 à 27, dans lequel au moins soit ladite application, soit lesdites applications sont des applications virtuelles.

29. Un système conformément à l'une des revendications 17 à 28, dans lequel les informations sont gardées dans de la mémoire non volatile, de telle sorte que lesdites informations sont conservées pendant des redémarrages du terminal.

30. Un système conformément à l'une des revendications 17 à 29, dans lequel une application est désignée comme étant une application par défaut à l'échelle du système autorisée à être exécutée sur tous les terminaux dans un réseau numérique.

31. Un système conformément à l'une des revendications 17 à 30, dans lequel lesdits services comprennent au moins un service parmi des services email, des services Internet, des services actualités, de contenu de scriptage de langage, de vidéo à la demande, de navigation Web, de guide de programmation électronique, de publicité, d'audio à la demande, des services de téléphonie, de bourse, de météo, des services et informations voyage, de jeux, de jeux d'argent, de finance, de shopping et de vote.

32. Un système conformément à l'une des revendications 17 à 31, dans lequel lesdites applications comprennent au moins un service parmi des services email, des services Internet, des services actualités, de contenu de scriptage de langage, de vidéo à la demande, de navigation Web, de guide de programmation électronique, de publicité, d'audio à la demande, des services de téléphonie, de bourse, de météo, des services et informations voyage, de jeux, de jeux d'argent, de finance, de shopping et de vote.
